# EUROPÄISCHE PATENTSCHRIFT

(11) **EP 4 139 164 B1**
(45) Veröffentlichungstag und Bekanntmachung des Hinweises auf die Patenterteilung: **22.11.2023**
(21) Anmeldenummer: 21720415.5
(22) Anmeldetag: 16.04.2021
(51) Int. Cl.: B60N 2/815, B60N 2/818, B60N 2/824, B60N 2/835, B60N 2/894, B60N 2/844

(54) **KOPFSTÜTZE FÜR EINEN SITZ UND FAHRZEUGSITZ**
HEADREST FOR A SEAT, AND VEHICLE SEAT
APPUI-TÊTE POUR SIÈGE ET SIÈGE DE VÉHICULE

(30) Priorität: 23.04.2020 DE 102020205186; 05.08.2020 DE 102020120640
(43) Veröffentlichungstag der Anmeldung: 01.03.2023
(73) Patentinhaber: Adient US LLC, Plymouth, MI 48170 (US)
(72) Erfinder: MARTINKA, Michal, 91501 Nove Mesto nad Vahom (SK); REZBARIK, Miroslav, 91101 Trencin (SK)
(74) Vertreter: Liedhegener, Ralf
(86) Internationale Anmeldenummer: PCT/EP2021/059950
(87) Internationale Veröffentlichungsnummer: WO 2021/213926

(56) Entgegenhaltungen:
- DE-A1-102010 061 308
- DE-B3-102018 218 909

## Beschreibung

Die Erfindung betrifft eine Kopfstütze, umfassend zumindest einen Kopfstützenkörper, ein Grundtragelement, an welchem der Kopfstützenkörper höhenverstellbar und in einer Höhenposition arretierbar angeordnet ist, ein Halteelement, mittels welchem der Kopfstützenkörper an dem Grundtragelement höhenverstellbar angeordnet ist, wobei das Halteelement in der eingestellten Höhenposition lösbar arretierbar ist, das Halteelement das Grundtragelement durchgreift, und das Halteelement beidseitig des Grundtragelements mit dem Kopfstützenkörper verbunden ist, und ein Verriegelungselement zur Entriegelung und Verriegelung des Halteelements in der eingestellten Höhenposition. Die Erfindung betrifft zudem einen Fahrzeugsitz mit einer solchen Kopfstütze.

### Stand der Technik

Aus dem Stand der Technik sind verschiedene höhenverstellbare Kopfstützen, welche relativ zu einer Rückenlehne eines Sitzes höhenverstellbar sind, bekannt (siehe DE-A-102010061308).

Aus der DE 20 2009 013 635 U1 ist eine Kopfstütze bekannt, umfassend einen Kopfstützenkörper, ein Grundtragelement, an welchem der Kopfstützenkörper höhenverstellbar und in einer Höhenposition arretierbar angeordnet ist, ein Halteelement, mittels welchem der Kopfstützenkörper am Grundtragelement höhenverstellbar angeordnet ist, wobei das Halteelement und in der eingestellten Höhenposition lösbar arretierbar ist, und ein Verriegelungselement zur Entriegelung und Verriegelung des Halteelements in der eingestellten Höhenposition. Das Haltelement ist an einer unteren Rahmenstrebe des Kopfstützenkörpers und einer oberen Rahmenstrebe des Kopfstützenkörpers befestigt. Das Haltelement durchgreift das Grundtragelement, ohne dabei in diesem geführt zu sein. Der Kopfstützenkörper und mit diesem das Halteelement ist höhenverstellbar an zwei Führungsstangen geführt.

Die US 10 040 382 B2 offenbart eine Kopfstütze mit einem Kopfstützenkörper, der ein vorderes, eine Kopfanlagefläche aufweisendes Kopfstützenteilelement und ein hinteres Kopfstützenteilelement aufweist, wobei das vordere Kopfstützenteilelement relativ beweglich zu dem hinteren Kopfstützenteilelement geführt ist.

Die DE 20 2018 102 807 U1 offenbart eine Kopfstützenbaugruppe, umfassend ein feststehendes Rückgehäuse, das einen ersten und einen zweiten Antrieb einfasst, eine Anbringungsplatte, die außerhalb des feststehenden Rückgehäuses positioniert und zur horizontalen und vertikalen Einstellung der Anbringungsplatte an den ersten und zweiten Antrieb wirkgekoppelt ist, ein Kopfstützenpolster, das ein zentrales Stützelement aufweist, das zwischen einer aufrechten und einer angewinkelten Position schwenkbar an die Anbringungsplatte gekoppelt ist; und eine erste und eine zweite Seitenauflage, die schwenkbar an gegenüberliegende Enden des zentralen Stützelements gekoppelt sind, wobei die erste und zweite Seitenauflage zwischen ausgezogenen und eingezogenen Positionen betreibbar sind.

Aus der DE 10 2007 048 152 B3 ist ein Fahrzeugsitz bekannt, umfassend eine Sitzlehne zum Halten des Rückens eines Insassen, eine Stange, die an der Sitzlehne montiert ist und sich von dieser erstreckt, einen Stopp, der an der Stange montiert ist, einen Rahmen, der derart an der Stange montiert ist, dass er entlang der Stange gleiten kann, eine Kopfstütze, die an dem Rahmen montiert ist, um den Kopf eines Insassen zu halten, einen Sperrmechanismus, der mit dem Stopp und dem Rahmen zusammenwirkt, um inkrementelle Sperrpositionen des Rahmens relativ zu dem Stopp vorzusehen, und ein Stellglied, das den Sperrmechanismus löst, damit die Kopfstütze und der Rahmen entlang der Stange gleiten können, wobei der Sperrmechanismus eine drehbare Welle umfasst, wobei die Welle oder der Stopp eine in der Längsrichtung vorgesehene Reihe von Vertiefungen aufweist, und wobei das jeweils andere Glied wenigstens einen Vorsprung aufweist, der in einer gesperrten Drehposition der Welle mit einer aus der Reihe von Vertiefungen verbunden ist, während der wenigstens eine Vorsprung in einer gelösten Drehposition der Welle von der Reihe von Vertiefungen gelöst ist, so dass die Kopfstütze und der Rahmen entlang der Stange gleiten können.

Die DE 10 2010 061 308 A1 offenbart eine höhenverstellbare Kopfstütze für Fahrzeugsitzlehne, umfassend fixe Zapfen, welche dazu vorgesehen sind mit der Lehne verbunden zu werden und sich im Wesentlichen vertikal erstrecken, ein bewegliches Gestell, welches verschiebbar an den Zapfen montiert ist und eine Verriegelung, welche mit dem beweglichen Gestell gekoppelt ist und an diesem entlang einer horizontalen Richtung verschiebbar ist, auf eine Art und Weise, dass das Gestell an den Zapfen in einer Vielzahl von Positionen verriegelt werden kann, wobei die Kopfstütze eine Traverse umfasst, welche die oberen Enden der Zapfen verbindet, wobei die Traverse und die Verriegelung Rasten und Zähne umfassen, die dazu vorgesehen sind miteinander so zusammen zu wirken, dass das Gestell in Bezug auf die Traverse in einer der Vielzahl von Positionen verriegelt werden kann.

### Aufgabe

Der Erfindung liegt die Aufgabe zu Grunde, eine Kopfstütze der eingangs genannten Art zu verbessern, insbesondere einfacher und kostengünstiger zu gestalten, sowie einen entsprechenden Fahrzeugsitz bereitzustellen.

### Lösung

Diese Aufgabe wird erfindungsgemäß gelöst durch eine Kopfstütze, umfassend zumindest einen Kopfstützenkörper, ein Grundtragelement, an welchem der Kopfstützenkörper höhenverstellbar und in einer Höhenposition arretierbar angeordnet ist, ein Halteelement, mittels welchem der Kopfstützenkörper an dem Grundtragelement höhenverstellbar angeordnet ist, wobei das Halteelement in der eingestellten Höhenposition lösbar arretierbar ist, das Halteelement das Grundtragelement durchgreift, und das Halteelement beidseitig des Grundtragelements mit dem Kopfstützenkörper verbunden ist, und ein Verriegelungselement zur Entriegelung und Verriegelung des Halteelements in der eingestellten Höhenposition, wobei das Halteelement an dem Grundtragelement höhenbeweglich geführt ist.

Dadurch, dass das Halteelement an dem Grundtragelement höhenbeweglich, das heißt überwiegend in Vertikalrichtung z, geführt ist, ist eine besonders kostengünstige Führung des Kopfstützenkörpers an dem Grundtragelement zur Verfügung gestellt.

Die Kopfstütze ist höhenverstellbar. Die Kopfstütze weist das Grundtragelement und das daran oder darin angeordnete, insbesondere weitgehend parallel zu einer Vertikalrichtung höhenverschieblich geführte, Halteelement auf. Das Halteelement dient zur Aufnahme und Halterung eines Kopfstützenkörpers, insbesondere zweier Kopfstützenschalen. Zur Ausbildung einer Führung und Arretierung des Kopfstützenkörpers in wenigstens einer Höhenposition umfasst das Grundtragelement vorzugsweise eine Anzahl von Öffnungen und ein zwischen einer entriegelten Position und einer verriegelten Position relativ zum Grundtragelement bewegliches Verriegelungselement. Das Verriegelungselement ist vorzugsweise in Querrichtung beweglich geführt, insbesondere an dem Grundtragelement in Querrichtung beweglich geführt.

Das Halteelement umfasst vorzugsweise eine Anzahl von Verbindungselementen oder Führungsteilen, wobei die Verbindungselemente oder Führungsteile mittels des Verriegelungselements in einer eingestellten Höhenposition des Kopfstützenkörpers lösbar arretierbar sind. Das Grundtragelement kann dabei an wenigstens einem Tragelement befestigt sein. Das Tragelement kann an einem Sitz, insbesondere an einem Fahrzeugsitz, gehalten sein. Der Kopfstützenkörper kann mittels des wenigstens einen Tragelements an dem Sitz gehalten sein. Das Tragelement ist beispielsweise als ein U-förmiger Tragbügel ausgebildet oder ist durch zwei Tragstangen gebildet.

Die mit der Erfindung erzielten Vorteile bestehen darin, dass ein Kopfstützenkörper der höhenverstellbaren Kopfstütze besonders einfach in der Höhe, vorzugsweise weitgehend parallel zu einer Fahrzeug-Vertikalrichtung, verstellbar ist, und dass die Kopfstütze eine besonders kompakte Bauform aufweist und einfach zu montieren ist. Mittels der erfindungsgemäßen Kopfstütze sind Komfort und Sicherheit für einen Fahrzeuginsassen verbessert.

Eine mögliche Ausführungsform sieht vor, dass der Kopfstützenkörper zumindest zwei verbindbare Kopfstützenteilelemente umfasst, wobei das Halteelement die beiden Kopfstützenteilelemente verbindet. Beispielsweise umfasst das Halteelement mindestens ein Verbindungselement, insbesondere einen Verbindungsstift oder eine Verbindungsstange. Insbesondere sind zwei Verbindungsstifte vorgesehen, die sich durch das Grundtragelement erstrecken und die beiden Kopfstützenteilelemente, insbesondere Kopfstützenschalen, miteinander verbinden. Vorzugsweise ist ein Kopfstützenteilelement, insbesondere eine vordere Kopfstützenschale, vor dem Grundtragelement und ein weiteres Kopfstützenteilelement, insbesondere eine hintere Kopfstützenschale, hinter dem Grundtragelement angeordnet, wobei das Halteelement die beiden Kopfstützenteilelemente miteinander verbindet. Das Halteelement, insbesondere die Verbindungsstifte, kann sowohl dem Verbinden der Kopfstützenteilelemente als auch einem Halten des Kopfstützenkörpers in der gewünschten Höhenposition dienen. Dadurch ist das Haltelement multifunktional.

Vorzugsweise weist das Grundtragelement mindestens eine Öffnung, vorzugsweise mindestens eine sich weitgehend parallel zu einer Vertikalrichtung erstreckende Öffnung auf, in welcher das Halteelement höhenbeweglich angeordnet ist. Bei einer Ausführung mit zwei Verbindungsstiften sind entsprechend zwei Öffnungen, vorzugsweise zwei sich mindestens weitgehend parallel zu einer Vertikalrichtung erstreckende Öffnungen, insbesondere Langlöcher oder Schlitze, in dem Grundtragelement ausgebildet. Die Verbindungsstifte können sowohl dem Verbinden der Kopfstützenteilelemente als auch einem Halten des Kopfstützenkörpers in der gewünschten Höhenposition dienen.

Das Verriegelungselement kann zwischen einer entriegelten Position und einer verriegelten Position relativ zu dem Grundtragelement und dem Halteelement beweglich sein. Das Verriegelungselement ist beispielsweise als ein Verriegelungsschieber oder eine bewegliche Verriegelungsplatte ausgebildet. Das Verriegelungselement kann beweglich geführt sein. Das Verriegelungselement kann in einer Querrichtung beweglich geführt sein. Vorzugsweise ist das Verriegelungselement an dem Grundtragelement beweglich geführt. Das Verriegelungselement kann mit dem Grundtragelement eine Unterbaugruppe bilden.

Das Verriegelungselement kann eine Anzahl von Verriegelungsaufnahmen aufweisen, wobei das Halteelement in jeder verriegelten Höhenposition in einer der Verriegelungsaufnahmen eingreift, so dass der Kopfstützenkörper gegen eine Höhenverstellung arretiert ist.

Es kann ein Rückstellelement vorgesehen sein, dass das Verriegelungselement von der entriegelten Position in die verriegelte Position stellt. Wird das Verriegelungselement beispielsweise von einem Betätigungselement von der verriegelten Position in die entriegelte Position gestellt, so wird bei einem Loslassen des Betätigungselements, zum Beispiel eines Betätigungsknopfes, das Verriegelungselement automatisch mittels des Rückstellelements in die verriegelte Position gestellt, in welcher das Halteelement in die entsprechende Verriegelungsaufnahme arretierend eingreift und somit der Kopfstützenkörper gegen eine Höhenverstellung arretiert ist.

Eine mögliche Ausgestaltung der erfindungsgemäßen Kopfstütze sieht vor, dass das Halteelement gegenüber dem Grundtragelement manuell höhenverstellbar ist, insbesondere höhenverschieblich in dem Grundtragelement gelagert ist. In einer bevorzugten Ausführungsform umfasst das Halteelement zwei Verbindungselemente, die auch als Führungsteile, insbesondere Führungsstifte, ausgebildet sind. Dadurch sind die vorgenannten Vorteile auf eine besonders einfache und komfortable Weise erzielbar.

Das Halteelement kann eine Anzahl von als Führungsteile ausgebildeten Verbindungselementen aufweisen, insbesondere zwei Führungsteile, beispielsweise zwei Führungspins oder Führungsstifte. Dadurch kann das Halteelement zusammen mit dem von diesem gehaltenen Kopfstützenkörper besonders gut im Grundtragelement verschiebbar sein, insbesondere weitgehend parallel zu der Vertikalrichtung verschiebbar sein, und mittels des Verriegelungselements in einer eingestellten Höhenposition am Grundtragelement lösbar arretierbar sein. Bei einer Ausgestaltung der Verbindungselemente des Halteelements als Verbindungsstifte, die zudem als Führungsstifte dienen, weist das Grundtragelement zur Ausbildung einer Führung für die Verbindungsstifte eine Anzahl von Öffnungen, insbesondere zwei Öffnungen, beispielsweise zwei Langlöcher oder Slots, auf.

Das Halteelement ist eingerichtet, den Kopfstützenkörper höhenverstellbar zu dem Grundelement zu halten. Beispielsweise verbinden zwei Verbindungsstifte und/oder Führungsstifte des Halteelements zwei Körperschalen des Kopfstützenkörpers, insbesondere eine Frontschale und eine Rückenschale, fest miteinander.

Das Verriegelungselement ist beispielsweise als eine zwischen einer entriegelten und einer verriegelten Position verstellbare Verriegelungsplatte oder als ein Schieber ausgebildet, wobei in der entriegelten Position des Verriegelungselements der Kopfstützenkörper frei beweglich, insbesondere höhenverschieblich, ist und in der verriegelten Position eine Bewegung des Kopfstützenkörpers, insbesondere nach oben und nach unten, verhindert und der Kopfstützenkörper somit arretiert ist.

Zur Betätigung der Höhenverstellung der Kopfstütze kann ein Betätigungselement, insbesondere ein Betätigungsknopf, vorgesehen sein. Das Betätigungselement kann mit dem Verriegelungselement bewegungsgekoppelt sein. Durch eine Betätigung des Betätigungselements ist das Verriegelungselement aus einer verriegelten Position in eine entriegelte Position überführbar, so dass das Halteelement und mit diesem der Kopfstützenkörper frei beweglich, insbesondere höhenverschieblich, ist. Beim Loslassen oder Nichtbetätigen des Betätigungselements wird das Verriegelungselement automatisch, beispielsweise durch eine Federkraft, in die verriegelte Position gegenüber dem Grundtragelement gestellt und verriegelt. Hierzu ist ein Rückstellelement, insbesondere eine Rückstellfeder, vorgesehen.

Die Erfindung wird zudem gelöst durch einen Fahrzeugsitz mit einer erfindungsgemäßen Kopfstütze, die höhenverstellbar an dem Fahrzeugsitz, insbesondere an einer Rückenlehne des Fahrzeugsitzes, angeordnet ist.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen schematisch:
- Fig. 1:: eine Seitenansicht eines erfindungsgemäßen Fahrzeugsitzes mit einer erfindungsgemäßen Kopfstütze,
- Fig. 2:: in perspektivischer Ansicht die erfindungsgemäße Kopfstütze, aufweisend einen höhenverstellbaren Kopfstützenkörper, der an einem Tragelement angeordnet ist,
- Fig. 3A:: eine Seitenansicht der erfindungsgemäßen Kopfstütze, wobei ein Kopfstützenkörper in einer unteren Höhenposition angeordnet ist,
- Fig. 3B:: eine weitere Seitenansicht der erfindungsgemäßen Kopfstütze, wobei der Kopfstützenkörper in einer oberen Höhenposition angeordnet ist,
- Fig. 4:: die erfindungsgemäße Kopfstütze in einer Explosionsdarstellung,
- Fig. 5:: eine Rückansicht der erfindungsgemäßen Kopfstütze, ohne den Kopfstützenkörper, wobei ein Grundtragelement und ein Verriegelungselement in einer verriegelten Position dargestellt sind,
- Fig. 6:: eine Rückansicht der erfindungsgemäßen Kopfstütze, ohne den Kopfstützenkörper, wobei das Grundtragelement und das Verriegelungselement in einer entriegelten Position dargestellt sind,
- Fig. 7:: eine perspektivische Rückansicht der erfindungsgemäße Kopfstütze, ohne eine rückseitige Kopfstützenschale, wobei das Verriegelungselement in einer verriegelten Position dargestellt ist,
- Fig. 8:: eine geschnitten dargestellte Seitenansicht der erfindungsgemäßen Kopfstütze, wobei das Verriegelungselement in der verriegelten Position und der Kopfstützenkörper in der unteren Höhenposition dargestellt ist, und
- Fig. 9:: eine geschnitten dargestellte Seitenansicht der erfindungsgemäßen Kopfstütze, wobei das Verriegelungselement in der verriegelten Position und der Kopfstützenkörper in der oberen Höhenposition dargestellt ist.

Einander entsprechende Teile sind in allen Figuren mit den gleichen Bezugszeichen versehen.

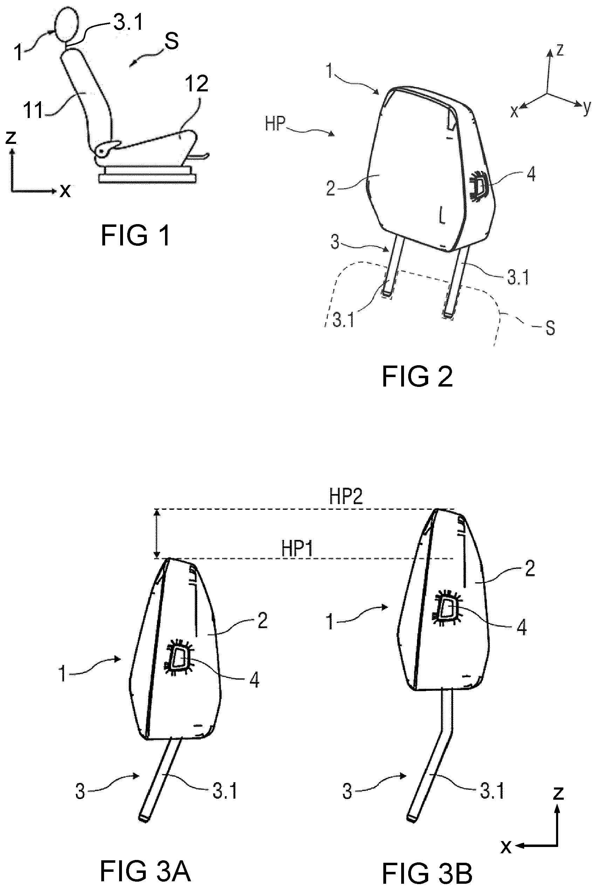

Ein in Figur 1 schematisch dargestellter Fahrzeugsitz S wird nachfolgend unter Verwendung von drei senkrecht zueinander verlaufenden Raumrichtungen beschrieben. Eine Längsrichtung x verläuft bei einem im Fahrzeug eingebauten Fahrzeugsitz S weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz S verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz S sitzenden Insassen in normaler Sitzposition, wobei der Fahrzeugsitz S im Fahrzeug eingebaut, in einer zur Personenbeförderung geeigneten Gebrauchsposition mit aufrecht stehender Rückenlehne 11 und wie üblich in Fahrtrichtung ausgerichtet ist. Der erfindungsgemäße Fahrzeugsitz S kann jedoch auch in abweichender Ausrichtung, beispielsweise quer zur Fahrtrichtung verbaut werden.

Der Fahrzeugsitz S weist die Rückenlehne 11 und ein Sitzteil 12 auf. Eine erfindungsgemäße Kopfstütze 1 ist an der Rückenlehne 11 angeordnet. Figur 2 zeigt schematisch in perspektivischer Ansicht die Kopfstütze 1 mit einem höhenverstellbaren Kopfstützenkörper 2.

Der Kopfstützenkörper 2 kann aus natürlichen Materialien oder aus einem Kunststoffmaterial oder einer Kombination aus beiden hergestellt sein. Der Kopfstützenkörper 2 ist an einem Tragelement 3 angeordnet. Das Tragelement 3 ist wiederum an dem Fahrzeugsitz S anordenbar, vorzugsweise befestigbar. Die Figur 2 zeigt zwei Stangenenden 3.1 des Tragelements 3, die einer Befestigung der höhenverstellbaren Kopfstütze 1 an dem Fahrzeugsitz S dienen.

Zur Höhenverstellung des Kopfstützenkörpers 2 relativ zu dem Tragelement 3 ist ein Betätigungselement 4 am Kopfstützenkörper 2 angeordnet, mittels dessen Betätigung eine Arretierung des Kopfstützenkörpers 2 in einer Höhenposition HP lösbar ist, wodurch der Kopfstützenkörper 2 nach oben oder nach unten (vorliegend weitgehend in und entgegen der Vertikalrichtung z) frei beweglich und damit höhenverschieblich ist. Durch die Formulierung "weitgehend parallel zu der Vertikalrichtung z" sollen auch Winkelabweichungen zu der Vertikalrichtung z eingeschlossen sein, die sich insbesondere aus einer Komfortwinkel-Einstellung der Rückenlehne 11 ergeben. Diese Winkelabweichungen können bis zu 30 Grad zur Vertikalrichtung z betragen.

Der Kopfstützenkörper 2 ist, insbesondere weitgehend parallel zu der Vertikalrichtung z, stufenweise höhenverstellbar und wahlweise in einer von mehreren Höhenpositionen HP lösbar arretierbar. Die gestuften Höhenpositionen sind eine unteren Höhenposition HP1, eine oberen Höhenposition HP2 und mehrere zwischen der unteren Höhenposition HP1 und der oberen Höhenposition HP2 angeordnete Höhenpositionen HP. Figur 3A zeigt die Kopfstütze 1, wobei der Kopfstützenkörper 2 in einer relativ zu dem Tragelement 3 unteren Höhenposition HP1 arretiert ist. Figur 3B zeigt den Kopfstützenkörper 2 in einer relativ zum Tragelement 3 oberen Höhenposition HP2.

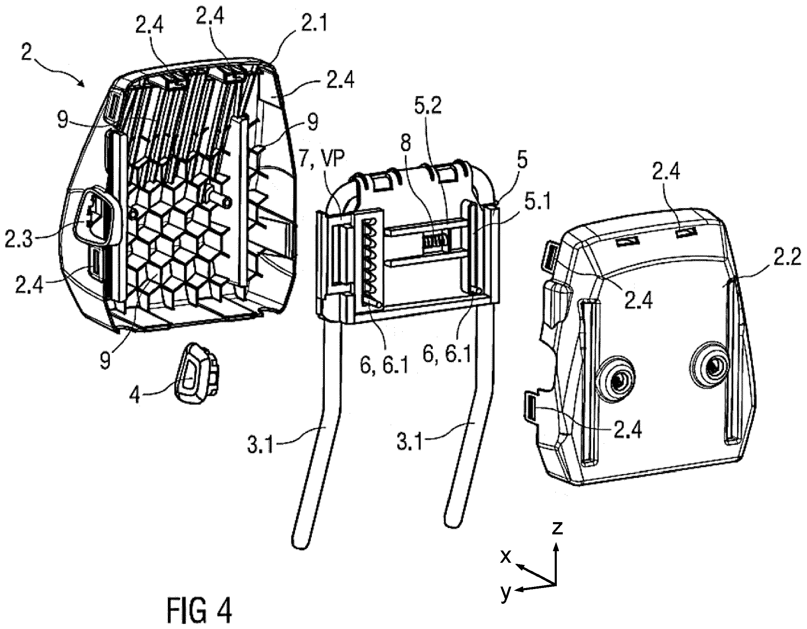

Figur 4 zeigt das Ausführungsbeispiel der Kopfstütze 1 in Explosionsdarstellung. Die Kopfstütze 1 umfasst ein Grundtragelement 5 und ein darin angeordnetes, insbesondere weitgehend parallel zu der Vertikalrichtung z, höhenverschieblich führbares Halteelement 6. Das Halteelement 6 ist dabei in dem Grundtragelement 5 und dadurch relativ zu dem Grundtragelement 5, beweglich, insbesondere höhenbeweglich, insbesondere höhenverschieblich, angeordnet. Darüber hinaus ist das Halteelement 6 relativ zum Tragelement 3 höhenbeweglich, insbesondere höhenverschieblich, an dem Grundtragelement 5 angeordnet oder gelagert.

Das Tragelement 3 ist im Ausführungsbeispiel als ein U-förmiger Tragbügel ausgebildet. Alternativ kann das Tragelement 3 als ein Paar von Tragstangen ausgebildet sein. Das Tragelement 3 kann aus einem Kunststoffmaterial oder aus einem Metall oder aus einer Metalllegierung gebildet sein.

Das Grundtragelement 5 ist aus einem Kunststoffmaterial, insbesondere einem hochfesten Kunststoffmaterial, gebildet. Das Grundtragelement 5 ist an dem wenigstens einen Tragelement 3 befestigt, insbesondere formschlüssig und/oder kraftschlüssig gehalten. Das Grundtragelement 5 ist somit fest mit dem Tragelement 3 verbunden. Somit beziehen sich die Höhenpositionen HP, HP1, HP2 auch auf das Grundtragelement 5.

Das Halteelement 6 dient zur Aufnahme und Halterung des Kopfstützenkörpers 2 an dem Grundtragelement 5. Das Halteelement 6 durchgreift beispielsweise das Grundtragelement 5 oder erstreckt sich durch dieses und ist beidseitig des Grundtragelements 5 mit dem Kopfstützenkörper 2 verbunden.

Der Kopfstützenkörper 2 ist aus zwei verbindbaren Kopfstützenteilelementen, insbesondere zwei Kopfstützenschalen 2.1 und 2.2, gebildet. Vorliegend ist einer vordere Kopfstützenschale 2.1 weitgehend vor dem Grundtragelement 5 angeordnet und eine hintere Kopfstützenschale 2.2 weitgehend hinter dem Grundtragelement 5 angeordnet.

Das Halteelement 6 ist gegenüber dem Grundtragelement 5 manuell höhenverstellbar, insbesondere höhenverschieblich. Das Halteelement 6 ist eingerichtet den Kopfstützenkörper 2 zu halten, und bei einer Höhenverstellung zu führen. Dazu umfasst das Halteelement 6 eine Anzahl von Verbindungselementen, die zugleich Führungsteile sind, vorliegend zwei Stifte 6.1. Die Stifte 6.1 sind als kombinierte Verbindungsstifte, Haltestifte und Führungsstifte ausgebildet. Mittels der zwei Stifte 6.1 werden die beiden Kopfstützenschalen 2.1 und 2.2 miteinander fest verbunden. Mittels der zwei Stifte 6.1 sind die Kopfstützenschalen 2.1 und 2.2 zudem relativ zum Grundtragelement 5 höhenverstellbar geführt und in einer der eingestellten Höhenpositionen HP, HP1, HP2 lösbar arretierbar gehalten. Die Stifte 6.1 sind weitgehend parallel zu der Längsrichtung x ausgerichtet. Durch die Formulierung "weitgehend parallel zu der Längsrichtung x" sollen Winkelabweichungen zu der Längsrichtung x von bis zu 30 Grad eingeschlossen sein.

Zusätzlich können die Kopfstützenschalen 2.1 und 2.2 zueinander korrespondierende Befestigungsmittel 2.4 aufweisen, beispielsweise Clipse und Clipöffnungen, mittels welcher die Kopfstützenschalen 2.1 und 2.2 miteinander lösbar verbindbar sind.

Zur Ausbildung einer Führung und Arretierung des Kopfstützenkörpers 2 in einer der Höhenpositionen HP, HP1, HP2 umfasst das Grundtragelement 5 eine Anzahl von Öffnungen 5.1, in welchen das Halteelement 6, insbesondere die Stifte 6.1, höhenverschieblich geführt sind. Die Öffnungen 5.1 sind beispielsweise als sich parallel zu der Vertikalrichtung z erstreckende Durchgangsöffnungen, beispielsweise Langlöcher oder Durchgangsnuten, ausgebildet.

Die Anzahl der Öffnungen 5.1 entspricht insbesondere der Anzahl der Stifte 6.1. Dadurch ist der Kopfstützenkörper 2 besonders gut im Grundtragelement 5, insbesondere weitgehend parallel zur Vertikalrichtung z, verschiebbar.

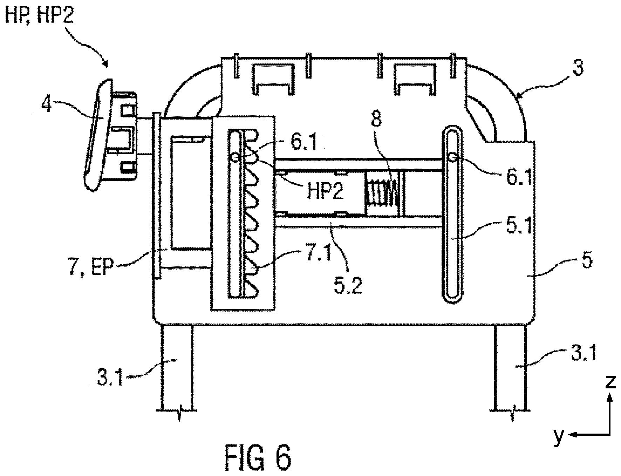

Darüber hinaus umfasst die Kopfstütze 1 ein zwischen einer verriegelten Position VP (dargestellt in Figuren 4, 5 und 7) und einer entriegelten Position EP (dargestellt in Figur 6) relativ zum Grundtragelement 5 bewegliches Verriegelungselement 7. Mittels des Verriegelungselements 7 ist der Kopfstützenkörper 2 in einer eingestellten Höhenposition HP, HP1 oder HP2 am Grundtragelement 5 und damit zu dem Fahrzeugsitz S lösbar arretierbar.

Das Verriegelungselement 7 ist beispielsweise als ein in Querrichtung y bewegliches plattenförmiges Verriegelungselement 7 oder als ein Schieber ausgebildet. Vorzugsweise ist das Verriegelungselement 7 an dem Grundtragelement 5 beweglich geführt.

Zur Betätigung der Höhenverstellung der Kopfstütze 1 ist das Betätigungselement 4, insbesondere ein Betätigungsknopf, vorgesehen. Das Verriegelungselement 7 ist im montierten Zustand der Kopfstütze 1 mit dem Betätigungselement 4 bewegungsgekoppelt.

Bei einer Betätigung des Betätigungselements 4 wird das Verriegelungselement 7 aus der verriegelten Position VP (dargestellt in Figuren 4, 5 und 7) in die entriegelte Position EP (dargestellt in Figur 6) bewegt, so dass das Halteelement 6 und mit diesem der Kopfstützenkörper 2 frei beweglich, insbesondere höhenverschieblich, ist. Beim Loslassen oder Nichtbetätigen des Betätigungselements 4 wird das Verriegelungselement 7 automatisch, beispielsweise durch Federkraft, in die verriegelte Position VP gegenüber dem Grundtragelement 5 bewegt und verriegelt das Halteelement 6, wodurch der Kopfstützenkörper 2 in der eingestellten Höhe fixiert und gehalten ist. Zur Überführung des Verriegelungselements 7 in die verriegelte Position VP ist ein Rückstellelement 8, insbesondere eine Rückstellfeder, vorgesehen.

Das Rückstellelement 8 ist in einer Aufnahme 5.2 des Grundtragelements 5 angeordnet. Ein Ende des Rückstellelements 8 steht mit dem Grundtragelement 5 im Eingriff, das gegenüberliegende Ende des Rückstellelements 8 steht mit dem Verriegelungselement 7 im Eingriff. Beim Betätigen des Betätigungselements 4 und demzufolge der Bewegung des Verriegelungselements 7 in die entriegelte Position EP, wird das Rückstellelement 8 gespannt. Beim Loslassen des Betätigungselements 4 kann sich das Rückstellelement 8 entspannen, wodurch das Verriegelungselement 7 automatisch in die verriegelte Position VP und das Betätigungselement 4 in seine Ausgangsstellung oder Ruhestellung zurückgestellt werden.

Das Betätigungselement 4 kann als ein Betätigungsknopf ausgebildet sein, der in einer Ausnehmung 2.3 des Kopfstützenkörpers 2 angeordnet und relativ zu diesem beweglich gehalten ist.

Die Kopfstützenschalen 2.1 und 2.2. können innenseitig mit Verstärkungselementen 9, insbesondere Rippen und/oder Stegen, längsverlaufend, kreuzverlaufend und/oder querverlaufend, versehen sein. Die vordere Kopfstützenschale 2.1 weist außenseitig eine Kopfauflagefläche auf und ist entsprechend gepolstert ausgestaltet. Die hintere Kopfstützenschale 2.2 ist außenseitig weitgehend plan ausgebildet und kann zumindest eine Aufnahme, insbesondere Rastnuten, Steckaufnahmen oder ähnliche Strukturen umfassen, welche beispielsweise der Aufnahme und Halterung von mobilen Geräten dienen.

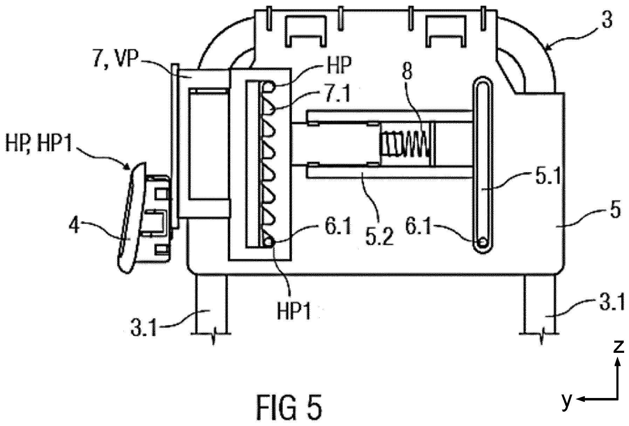

Figur 5 zeigt schematisch die Kopfstütze 1 mit dem Grundtragelement 5 und dem Verriegelungselement 7 in der verriegelten Position VP, ohne Kopfstützenkörper 2. Das Betätigungselement 4 ist in seiner Ausgangsstellung oder Ruhestellung, einer nichtbetätigten Stellung. Das Verriegelungselement 7 ist derart ausgebildet, dass nur einer der Stifte 6.1 verriegelt wird. Dieser Stift 6.1 ist als kombiniertes Verbindungsmittel, Führungsmittel und Verriegelungsmittel ausgebildet, das sowohl in einer zugehörigen Öffnung 5.1 bei einer Höhenverstellung höhenverschiebbar geführt ist, als auch in einer eingestellten Höhenposition HP, HP1, HP2 lösbar arretierbar ist und zudem die beiden Kopfstützenschalen 2.1 und 2.2 miteinander verbindet. Der andere Stift 6.1 ist nur in einer zugehörigen Öffnung 5.1 geführt, jedoch nicht lösbar arretierbar.

Das Verriegelungselement 7 umfasst eine Mehrzahl von Verriegelungsaufnahmen 7.1, welche verschiedenen Höhenpositionen HP, HP1, HP2 entsprechen, wobei der eine Stift 6.1 in Abhängigkeit der gewählten Höhenpositionen HP, HP1, HP2 in einer dieser Verriegelungsaufnahmen 7.1 lösbar arretierbar anordenbar ist.

Das Verriegelungselement 7 ist vorliegend als eine zwischen der verriegelten Position VP und der entriegelten Position EP verstellbare Verriegelungsplatte ausgebildet, wobei in der entriegelten Position EP der Kopfstützenkörper 2 frei beweglich, insbesondere höhenverschieblich, ist und in der verriegelten Position VP die Bewegung des Kopfstützenkörpers 2, insbesondere nach oben und nach unten, arretiert ist.

In der verriegelten Position VP ist das Rückstellelement 8 entspannt, wobei das Verriegelungselement 7 in der verriegelten Position VP und das Betätigungselement 4 in seiner Ausgangsstellung oder nichtbetätigten Stellung gehalten sind.

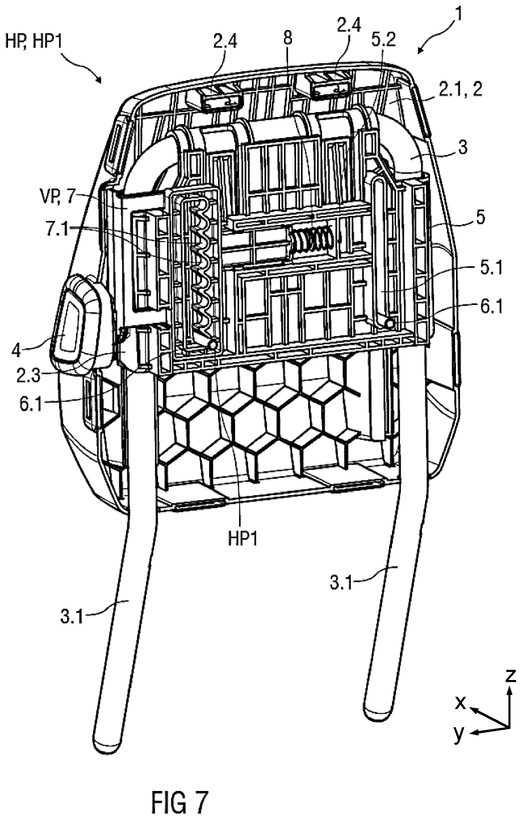

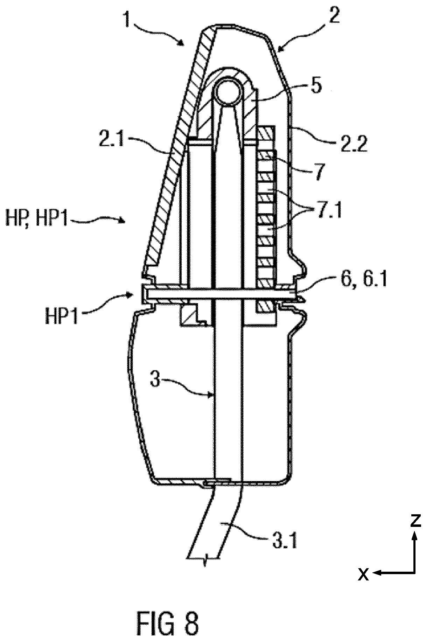

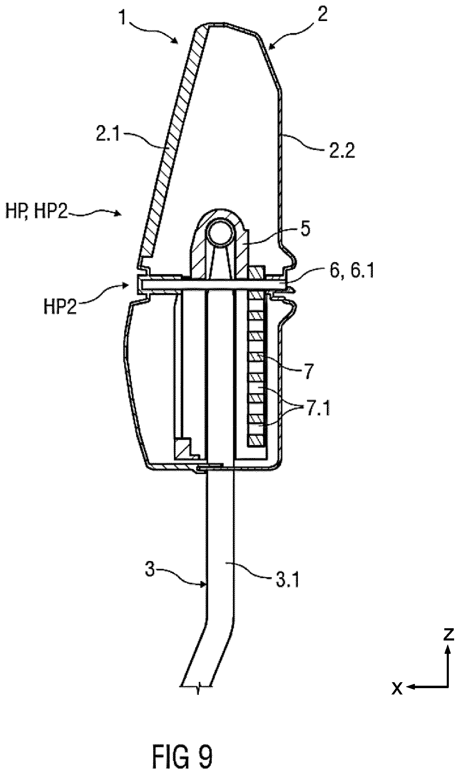

Figur 6 zeigt das Verriegelungselement 7 in der entriegelten Position EP, in welcher die Stifte 6.1 frei beweglich nach oben und unten in den Öffnungen 5.1 geführt sind. Das Rückstellelement 8 ist gespannt. Figur 7 zeigt das Verriegelungselement 7 in der verriegelten Position VP. Figur 8 zeigt den Kopfstützenkörper 2 in der unteren Höhenposition HP1. Figur 9 zeigt den Kopfstützenkörper 2 in der oberen Höhenposition HP2.

Das Halteelement 6 ist eingerichtet den Kopfstützenkörper 2 höhenverstellbar zu halten. Beispielsweise verbinden die beiden Stifte 6.1 die zwei Körperschalen 2.1, 2.2 fest miteinander.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

### Bezugszeichen liste

- 1: Kopfstütze
- 2: Kopfstützenkörper
- 2.1: (vordere) Kopfstützenschale
- 2.2: (hintere) Kopfstützenschale
- 2.3: Ausnehmung
- 2.4: Befestigungsmittel
- 3: Tragelement
- 3.1: Stangenenden
- 4: Betätigungselement
- 5: Grundtragelement
- 5.1: Öffnung
- 5.2: Aufnahme
- 6: Halteelement
- 6.1: Stift
- 7: Verriegelungselement
- 7.1: Verriegelungsaufnahmen
- 8: Rückstellelement
- 9: Verstärkungselement
- 11: Rückenlehne
- 12: Sitzteil

- EP: entriegelte Position
- HP: Höhenposition
- HP1: Untere Höhenposition
- HP2: Obere Höhenposition
- S: Fahrzeugsitz
- VP: verriegelte Position
- x: Längsrichtung
- y: Querrichtung
- z: Vertikalrichtung

## Patentansprüche

1. Kopfstütze (1), umfassend zumindest:
- einen Kopfstützenkörper (2),
- ein Grundtragelement (5), an welchem der Kopfstützenkörper (2) höhenverstellbar und in einer Höhenposition (HP, HP1, HP2) arretierbar angeordnet ist,
- ein Halteelement (6), mittels welchem der Kopfstützenkörper (2) an dem Grundtragelement (5) höhenverstellbar angeordnet ist, wobei das Halteelement (6) in der eingestellten Höhenposition (HP, HP1, HP2) lösbar arretierbar ist, das Halteelement (6) das Grundtragelement (5) durchgreift, und das Halteelement (6) beidseitig des Grundtragelements (5) mit dem Kopfstützenkörper (2) verbunden ist, und
- ein Verriegelungselement (7) zur Entriegelung und Verriegelung des Halteelements (6) in der eingestellten Höhenposition (HP, HP1, HP2), wobei das Halteelement (6) an dem Grundtragelement (5) höhenbeweglich geführt ist.

2. Kopfstütze (1) nach Anspruch 1, wobei der Kopfstützenkörper (2) zumindest zwei verbindbare Kopfstützenteilelemente, insbesondere zwei Kopfstützenschalen (2.1, 2.2), umfasst und das Haltelement (6) die beiden Kopfstützenteilelemente verbindet.

3. Kopfstütze (1) nach Anspruch 1 oder 2, wobei das Halteelement (6) als mindestens ein Verbindungselement ausgebildet ist.

4. Kopfstütze (1) nach einem der vorhergehenden Ansprüche, wobei das Halteelement (6) als mindestens ein Führungsteil ausgebildet ist.

5. Kopfstütze (1) nach Anspruch 3 und 4, **dadurch gekennzeichnet, dass** das Halteelement (6) als ein mittels des Verriegelungselement (7) lösbar arretierbares Führungsteil ausgeführt ist.

6. Kopfstütze (1) nach einem der vorhergehenden Ansprüche, wobei das Halteelement (6) wenigstens einen Stift (6.1) aufweist.

7. Kopfstütze (1) nach Anspruch 6, wobei der wenigstens eine Stift (6.1) weitgehend parallel zu einer Längsrichtung (x) ausgerichtet ist.

8. Kopfstütze (1) nach einem der vorhergehenden Ansprüche, wobei das Grundtragelement (5) mindestens eine sich in Vertikalrichtung (z) erstreckende Öffnung (5.1) aufweist, in welcher das Halteelement (6) höhenbeweglich angeordnet ist.

9. Kopfstütze (1) nach einem der vorhergehenden Ansprüche, wobei das Verriegelungselement (7) zwischen einer entriegelten Position (EP) und einer verriegelten Position (VP) relativ zu dem Grundtragelement (5) und relativ zu dem Halteelement (6) beweglich ist.

10. Kopfstütze (1) nach Anspruch 9, wobei das Verriegelungselement (7) eine Anzahl von Verriegelungsaufnahmen (7.1) aufweist.

11. Kopfstütze (1) nach Anspruch 10, wobei das Halteelement (6) in der verriegelten Position (VP) in eine der Verriegelungsaufnahmen (7.1) arretierend eingreift.

12. Kopfstütze (1) nach einem der Ansprüche 9 bis 11, wobei ein Rückstellelement (8) vorgesehen ist, dass das Verriegelungselement (7) von der entriegelten Position (EP) in die verriegelte Position (VP) stellt.

13. Kopfstütze (1) nach einem der vorhergehenden Ansprüche, wobei das Grundtragelement (5) an wenigstens einem Tragelement (3) befestigt ist.

14. Fahrzeugsitz (S) mit einer Kopfstütze (1) nach einem der vorhergehenden Ansprüche.

15. Fahrzeugsitz (S) nach Anspruch 14, wobei ein Tragelement (3) der Kopfstütze (1) an einer Rückenlehne (11) des Fahrzeugsitzes (S) angeordnet und gehalten ist.

## Claims

1. Headrest (1) comprising at least:
- a headrest body (2),
- a base supporting element (5), on which the headrest body (2) is arranged in a height-adjustable manner and so as to be arrestable in a height position (HP, HP1, HP2),
- a holding element (6), by which the headrest body (2) is arranged in a height-adjustable manner on the base supporting element (5), wherein the holding element (6) is able to be releasably arrested in the set height position (HP, HP1, HP2), the holding element (6) engages through the base supporting element (5), and the holding element (6) is connected to the headrest body (2) on both sides of the base supporting element (5), and
- a locking element (7) for unlocking and locking the holding element (6) in the set height position (HP, HP1, HP2),
wherein
the holding element (6) is guided in a height-movable manner on the base supporting element (5).

2. Headrest (1) according to Claim 1, wherein the headrest body (2) comprises at least two connectable headrest sub-elements, in particular two headrest shells (2.1, 2.2) and the holding element (6) connects the two headrest sub-elements.

3. Headrest (1) according to Claim 1 or 2, wherein the holding element (6) is in the form of at least one connecting element.

4. Headrest (1) according to one of the preceding claims, wherein the holding element (6) is in the form at least of at least one guiding part.

5. Headrest (1) according to Claims 3 and 4, **characterized in that** the holding element (6) is in the form of a guiding part which is able to be releasably arrested by the locking element (7).

6. Headrest (1) according to one of the preceding claims, wherein the holding element (6) has at least one pin (6.1).

7. Headrest (1) according to Claim 6, wherein the at least one pin (6.1) is oriented substantially parallel to a longitudinal direction (x).

8. Headrest (1) according to one of the preceding claims, wherein the base supporting element (5) has at least one opening (5.1) extending in a vertical direction (z), in which the holding element (6) is arranged in a height-movable manner.

9. Headrest (1) according to one of the preceding claims, wherein the locking element (7) is movable relative to the holding element (6) and relative to the base supporting element (5) between an unlocked position (EP) and a locked position (VP).

10. Headrest (1) according to Claim 9, wherein the locking element (7) has a number of locking receptacles (7.1).

11. Headrest (1) according to Claim 10, wherein, in the locked position (VP), the holding element (6) engages into one of the locking receptacles (7.1) in an arresting manner.

12. Headrest (1) according to one of Claims 9 to 11, wherein provision is made of a restoring element (8) which moves the locking element (7) from the unlocked position (EP) into the locked position (VP).

13. Headrest (1) according to one of the preceding claims, wherein the base supporting element (5) is fastened to at least one supporting element (3).

14. Vehicle seat (S) having a headrest (1) according to one of the preceding claims.

15. Vehicle seat (S) according to Claim 14, wherein a supporting element (3) of the headrest (1) is arranged and held on a backrest (11) of the vehicle seat (S).

## Revendications

1. Appui-tête (1), comprenant au moins :
- un corps d'appui-tête (2),
- un élément de support de base (5), sur lequel le corps d'appui-tête (2) est agencé de manière réglable en hauteur et est apte à être bloqué dans une position en hauteur (HP, HP1, HP2),
- un élément de retenue (6), au moyen duquel le corps d'appui-tête (2) est agencé de manière réglable en hauteur sur l'élément de support de base (5), l'élément de retenue (6) étant blocable de manière amovible dans la position de hauteur réglée (HP, HP1, HP2), l'élément de retenue (6) traversant l'élément de support de base (5), et l'élément de retenue (6) étant relié au corps d'appui-tête (2) des deux côtés de l'élément de support de base (5), et
- un élément de blocage (7) pour débloquer et bloquer l'élément de retenue (6) dans la position de hauteur réglée (HP, HP1, HP2), l'élément de retenue (6) étant guidé de manière mobile en hauteur sur l'élément support de base (5).

2. Appui-tête (1) selon la revendication 1, dans lequel le corps d'appui-tête (2) comprend au moins deux sous-éléments d'appui-tête connectables, notamment deux coques d'appui-tête (2.1, 2.2), et l'élément de retenue (6) relie les deux sous-éléments d'appui-tête.

3. Appui-tête (1) selon la revendication 1 ou 2, dans lequel l'élément de retenue (6) est conçu au moins sous la forme d'un élément de liaison.

4. Appui-tête (1) selon l'une des revendications précédentes, dans lequel l'élément de retenue (6) est conçu au moins sous la forme d'une pièce de guidage.

5. Appui-tête (1) selon les revendications 3 et 4, **caractérisé en ce que** l'élément de retenue (6) est conçu sous la forme d'une pièce de guidage qui est apte à être bloquée de manière libérable au moyen de l'élément de blocage (7).

6. Appui-tête (1) selon l'une des revendications précédentes, dans lequel l'élément de retenue (6) présente au moins une broche (6.1).

7. Appui-tête (1) selon la revendication 6, dans lequel ladite au moins une broche (6.1) est alignée en grande partie parallèlement à une direction longitudinale (x).

8. Appui-tête (1) selon l'une des revendications précédentes, dans lequel l'élément support de base (5) présente au moins une ouverture (5.1) s'étendant selon la direction verticale (z), dans laquelle est agencé l'élément de retenue (6) de manière à être mobile verticalement.

9. Appui-tête (1) selon l'une des revendications précédentes, dans lequel l'élément de blocage (7) est mobile entre une position débloquée (EP) et une position bloquée (VP) par rapport à l'élément support de base (5) et par rapport à l'élément de retenue (6).

10. Appui-tête (1) selon la revendication 9, dans lequel l'élément de blocage (7) comporte un nombre de réceptacles de blocage (7.1).

11. Appui-tête (1) selon la revendication 10, dans lequel l'élément de retenue (6) s'engage de manière blocable dans l'un des logements de blocage (7.1) en position bloquée (VP).

12. Appui-tête (1) selon l'une des revendications 9 à 11, dans lequel il est prévu un élément de rappel (8) qui fait passer l'élément de blocage (7) de la position débloquée (EP) à la position bloquée (VP).

13. Appui-tête (1) selon l'une des revendications précédentes, dans lequel l'élément support de base (5) est fixé à au moins un élément support (3).

14. Siège de véhicule (S) avec un appui-tête (1) selon l'une des revendications précédentes.

15. Siège de véhicule (S) selon la revendication 14, dans lequel un élément porteur (3) de l'appui-tête (1) est agencé et maintenu sur un dossier (11) du siège de véhicule (S).
